# EUROPEAN PATENT SPECIFICATION

(11) **EP 2 404 779 B1**
(45) Date of publication and mention of the grant of the patent: **25.03.2020**
(21) Application number: 10168539.4
(22) Date of filing: 06.07.2010
(51) Int. Cl.: H02J 3/38, B60L 53/63

(54) **Charging of electrical vehicles**
Laden elektrischer Fahrzeuge
Charge de véhicules électriques

(43) Date of publication of application: 11.01.2012
(73) Proprietor: ABB Schweiz AG, 5400 Baden (CH)
(72) Inventor: Timbus, Adrian, 5507 Mellingen (CH); Oudalov, Alexandre, 5442, Fislisbach (CH); Nygren, Bertil, 722 45, Västerås (SE); Papastergiou, Konstantinos, 722 16, Västerås (SE); Balgard, Lennart, 732 32, Arboga (SE); Naedele, Martin, 8050, Zürich (CH)
(74) Representative: Michalski Hüttermann & Partner Patentanwälte mbB

(56) References cited:
- EP-A2- 1 487 079
- US-A1- 2008 040 479
- US-A1- 2009 040 029
- US-A1- 2010 017 045
- US-A1- 2010 079 004

## Description

### FIELD OF THE INVENTION

The invention relates to the field of electrical power distribution. In particular, the invention relates to a method and program elements for controlling the charging of a battery of an electrical vehicle or batteries of a plurality of electrical vehicles, a computer readable medium, and a system for charging an electrical vehicle.

### BACKGROUND OF THE INVENTION

Today a charging of plug-in hybrid electrical vehicles (PHEV) and electrical vehicles (EV), both in the following generally called electrical vehicles, may be realized at different locations. The electrical vehicles may charged at the home of the owner (home charging) or remote from the home (remote charging), for example at public parking slots, shopping malls and areas or at the office of the owner.

If there is a limited number of such vehicles (like today), they may be charged at any time and no problems are caused with respect to the electrical power system, such as power grid congestions or the needed demand of extra power reserves. However, in the future, a large fleet of electric cars may represent a substantial electrical load on the grid.

Further, the recent growth of small scale distributed energy resources (DER) sector has surpassed all predictions. Much of this growth was due to more favourable policies amidst increasing concerns about climate change and energy security. A distributed energy resource, also called distributed energy source, may maximally generate up to few kilowatts (for example up to 10 kW), and may comprise renewable and/or conventional power generation technologies, for example reciprocating engines, microturbines, and/or solar photovoltaic. A distributed energy resource may be sited at the residential load, for example on the roof of a residential building.

The price for solar photovoltaic has dropped between one-third and one-fifth since the 1980th. Solar photovoltaic may be widely viewed as cost competitive for many grid-connected, building-integrated uses. The worldwide installed capacity of the solar photovoltaic power has escalated from 1.3 GW in 2001 to 15.2 GW in 2008 and a long-term estimation shows more than five times growth in PV installations worldwide between today and 2020.

US 2009/040029 A1 describes a system including a transceiver device physically coupled to an electric resource, the transceiver device being configured to provide information about the electric resource to a charging component.

US 2010/079004 A1 describes a method including determining location information for the plurality of vehicles, determining that a demand for power in a first portion of the power grid has reached a power threshold, determining that the location information associated with a set of the plurality of vehicles satisfies a similarity threshold with the first portion of the power grid, and transmitting a request to a first group of vehicles in the set of vehicles to discharge power.

### DESCRIPTION OF THE INVENTION

It is an object of the invention to optimize the costs and the power distribution, when electrical vehicles are charged from a power grid to which a distributed energy source is connected.

This object is solved by the subject-matter of the independent claims. Exemplary embodiments of the invention are evident from the dependent claims.

A first aspect of the invention relates to a method for controlling the charging of a battery of an electrical vehicle. The electrical vehicle is connected, via a section of a power grid, which may be a large scale power grid, to a distant distributed energy source. In particular, the method is a method for smart charging of an electric vehicle from a distributed energy source owned by the same owner.

A distributed energy source may be a renewable energy source like a photovoltaic system, which, for example is owned by the owner of the electrical vehicle. A distributed energy source may be a (small) generator, which, for example, is used to charge the electrical vehicle, when the electrical vehicle is charged at home. The generator may also be small microturbine used to generate heat and electricity, for example for the home of the owner of the electrical vehicle. However, a distributed energy resource may be a general renewable energy source, like a large scale wind or solar plant or a tidal power plant.

According to an embodiment of the invention, the method comprises the step of determining the power instantaneously generated by the distributed energy source. For example, the distributed energy has a controller determining or measuring the actual power of the distributed energy resource.

According to an embodiment of the invention, the method comprises the step of constraining a charging power, which may be defined by the charging speed or charging rate, of the battery of the vehicle such that not more than the actual available power (from the distributed energy source) is withdrawn from the power grid. The electrical vehicle or the charging station may comprise a further controller which constrains or limits the charging power such that the power absorbed by the battery from the power grid is less or equal to the power fed by the distributed energy source into the grid.

According to an embodiment of the invention, the method comprises the steps of determining a maximal power transmittable via the section of the power grid between the electrical vehicle and the distributed energy source, and constraining the charging power of the vehicle such that an instantaneously transmitted power does not exceed the transmittable maximum power. The instantaneously transmitted power may be the power transmitted from the power grid to the battery, for example from a charging station to the vehicle.

The power grid transmitting the electric power from the distributed energy source to the electrical vehicle is only capable of transmitting a limited amount of power. The section of the power grid, i. e. electrical lines, used for connecting the electrical vehicle with the distributed energy source may not only be used for transmitting the charging power but also other electrical power between other sources and loads. The power transmitted between the electrical vehicle and the distributed energy source may be constrained such that the capacity of the lines is not exceed and/or the power transmission between the other sources and loads is not obstructed.

In this way, the overall energy efficiency by charging may be increased with the available bulk intermittent renewable power generation resources. Further, a simultaneous charging may be avoided to keep a load on the primary equipment (transformer stations, conductors, etc.) of the power grid below its capacity limits.

The method may be seen as a smart charging concept for electrical vehicles which optimizes the costs of charging and the use of electricity generated by small scale distributed energy sources owned by the vehicle owner for both local and remote charging of the electrical vehicles, i.e. as a concept of "routing" energy from a small local generator to an electric vehicle.

The method may have the following advantages for the end consumers, i. e. the owners of the vehicles and distributed energy sources: The end consumers may always charge for free from the own distributed energy source instead of buying electrical energy from the network operator at high prices. Further, they may not need to investment in stationary energy storages.

Additionally, the method may have the following advantages for the network operator: The network operator may be able to prepare a more accurate load forecast in the service area. The network operator may charge a sservice fee for a usage of the utility grid infrastructure. In case of home charging, there may be a possible loss reduction by reducing current withdrawn from the grid.

A further aspect of the invention relates to a method for controlling the charging of a plurality of electrical vehicles.

According to an embodiment of the invention, at least a part of the plurality of electrical vehicles is controlled according to the method for controlling the charging of a battery of an electrical vehicle as described in the above and in the following.

According to an embodiment of the invention, the method for controlling the charging of a plurality of electrical vehicles further comprises the steps of: forecasting the charging load of the plurality of vehicles with respect to their location; and adapting the power generation of power generation facilities and a power distribution in the power grid such that the forecasted charging load can be satisfied. Each of the vehicles of the plurality of electrical vehicles comprises a controller which is adapted to communicate with the control infrastructure of the power grid. For example, the current loading state of the battery, the driving route and the departure time input into the route guidance system of the vehicle may be sent to the power grid. The data sent from the vehicles to the power grid may be collected in a central server which generates forecasts for a future charging load at certain sections of the power grid.

A further aspect of the invention relates to computer program (i. e. a computer program or parts of a computer program) for controlling the charging of an electrical vehicle or a plurality of vehicles, which, when being executed by at least one processor, are adapted to carry out the steps of the methods as described in the above and in the following. The processors may be parts of controllers or control devices of the charging station, the electrical vehicle and the power grid. For example, program elements may be executed in the grid controller (of the distribution network operator or a third party actor which may have servers to execute the control), the charging controller of the electrical vehicle and/or the controller of the distributed energy source.

A further aspect of the invention relates to computer-readable medium, in which such computer program are stored. A computer-readable medium may be a floppy disk, a hard disk, an USB (Universal Serial Bus) storage device, a RAM (Random Access Memory), a ROM (Read Only memory) and an EPROM (Erasable Programmable Read Only Memory). A computer readable medium may also be a data communication network, e.g. the Internet, which allows downloading a program code.
A further aspect of the invention relates to a system for charging an electrical vehicle or for charging a plurality of vehicles.

According to an embodiment of the invention, the system comprises a (large-scale) power grid controlled by a distributed network operator; a distributed energy source electrically connected to the power grid; wherein the electrical vehicle is electrically connectable to the power grid; wherein the distributed energy source is adapted to transmit its actual power generation to the power grid; wherein the electrical vehicle is adapted to transmit its load state to the power grid.

According to an embodiment of the invention, the distributed network operator, the electrical vehicle and the distributed energy source of the system are adapted to carry out the steps of the methods as described in the above and in the following.

It has to be understood that features of the method as described in the above and in the following may be features of the system as described in the above and in the following and vice versa.

If technically possible but not explicitly mentioned, also combinations of embodiments of the invention described in the above and in the following may be embodiments of the method and the system.

These and other aspects of the invention will be apparent from and elucidated with reference to the embodiment described hereinafter.

### BRIEF DESCRIPTION OF THE DRAWINGS

Below, embodiments of the present invention are described in more detail with reference to the attached drawings.
Fig. 1 shows a system for charging at least one electrical vehicle according to an embodiment of the invention.
Fig. 2 shows a system for charging at least one electrical vehicle according to a further embodiment of the invention.
Fig. 3 shows a flow diagram for a method for controlling the charging an electrical vehicle according to an embodiment of the invention.
Fig. 4 shows a diagram with charging schedules according to an embodiment of the invention.
Fig. 5 shows a flow diagram for a method for controlling the charging of a plurality of electrical vehicles according to an embodiment of the invention.
Fig. 6 shows an infrastructure that may be used by the system of Fig. 1 and 2 according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EMBODIMENTS

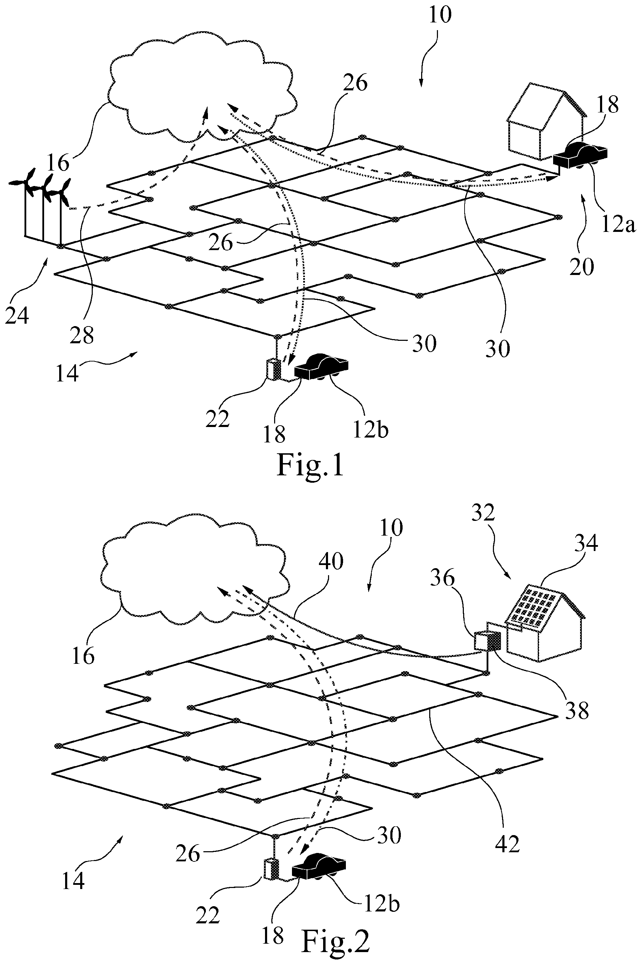

Fig. 1 shows a system 10 for charging at least one electrical vehicle 12a, 12b. The system 10 comprises a large-scale power grid 14 which may be controlled by a distributed network operator 16. The battery 18 of the electrical vehicle 12a, which may be detachable from the electrical vehicle 12a, is connected with the power grid 14 at a residential charging point 20. The electrical vehicle 12b (or its battery) is connected to the power grid at a public charging point 22.

The distribution network operator 16 or a third party actor 16 collects information about the electrical vehicle 12a, 12b connected to the power grid 14 via communication lines 26 and the output (real time and several hours ahead forecast) of the power plants 24 over a communication line 28 (either directly from the power plants 24 or via a transmission system operator). For example, the power plants 24 may be large scale wind farms as indicated in the figure, large/centralized power plants or local power plants like distributed energy sources. A third party actor 16 may be a charging station 22, a charging station provider chain or a central charging planning service provider.

Based on the available power generation and the load and transmission/distribution grid capacity the distribution network operator will calculate the amount and location of the electrical vehicles 12a, 12b which could be charged at a given moment and sends the control signals (direct control and/or price signal) to battery chargers 20, 22 over communication lines 30. A direct control signal may be data informing the battery charger about the values of loading power and loading time. A price signal may be data informing the battery charger about the costs of charging in the moment and the battery charger may determine to loading power from this information.

The battery chargers 20, 22 will receive signals via communication lines 30 from the distribution network operator 16 or third party actor 16 to start/stop/change the rate of charging either directly or via price signals. Therefore, depending on the network status and the decisions of the network operator 16 or third party actor 16, it might be the case that charging will not be possible at a particular location during a particular time interval.

Fig. 2 shows a further system 10 for charging at least one electrical vehicle 12b. The system of Fig. 2 may be combined with the system of Fig. 1 . A distributed energy source 32 is electrically connected to the power grid 14. For example, the distributed energy resource 32 comprises a photovoltaic panel 34 with an inverter 36 and controller 38. The distributed energy source 32 is adapted to transmit its actual generated power to the power grid 14, the distribution network operator 16 or third party actor 16 over the communication line 40. Further, the electrical vehicle 12b is adapted to transmit its load state to the power grid 14, the distribution network operator 16 or third party actor 16 over communication line 26.

The electrical vehicle 12b and the distributed energy resource 32, for example a residential micro-generation, may be owned by the same person. The elements 32, 36, 38, 12b of the system 10 collaborate together, such that their owner benefits. For example, the distributed energy source 19 may communicate (directly, via home energy management system or utility) with the charging station 22, which in turn may follow the generation output profile of the distributed energy source 32. If the distributed energy source 32 is a solar system depending on the solar radiation, production peaks of the distributed energy source 32 at working hours (noon), when the electrical vehicle 12b is usually away (at the office, at the shopping centers, etc.), locally generated energy may be directly channeled into the remotely located car battery. Due to the communication, the owner of the electrical vehicle may have the control on the charging costs which is a subject of available generating resources and grid capacity. This may lead to a better cost-benefit ratio, since energy for charging the car battery 18 does not have to be bought from the utility grid at a higher price as the price for the electricity generated by the distributed energy source 32 sold to the utility grid.

The system 10 may be seen as a smart grid connecting electrically and digitally various components and players in an electrical power system. It will allow the car battery charging process to follow the output profile of residential small scale generator in real time which will guarantee the lowest charging cost for the owner of the car and generator.

In case the end customer owns both the electrical vehicle 12b and a distributed energy source, the cost of car battery charging can be optimized. The method may be based on the bi-directional communication link 16, 30, 40 between a distributed energy resource 32, a car battery charger 22 and the distribution network operator 16 or third party actor 16 to track "electrons" flowing from a small scale generator 34 to the car battery 18. A local small generator 34 may be "paired" with a battery charger 22 via unique identification addresses registered in the database of the distribution network operator 16 or third party actor 16. The electrical vehicle 12b is not only connected via a section 42 of the power grid 14 to the distant distributed energy source 32, but also digitally over the communication links.

The distributed energy source 32 continuously sends information about its current power output and a short-term prediction of available local generation to the distribution network operator 16 or third party actor 16. The short term prediction of available power may be useful to schedule the charging of the electrical vehicle in case the transaction cannot be realized at a given time due to various problems (e.g. overloading of a line of the grid 14). The battery charger 22 sends the current state of charge of the battery 18 to the distribution network operator 16 or third party actor 16. The distribution network operator 16 or third party actor 16 verifies that a proposed transaction is technically feasible and sends out corresponding control signals to the battery charger 22. The method or process may be repeated at a specified time interval.

In case of using mobile charging stations 22, additional information about positioning of the station 22 may be needed in order to link it to a specific point in the distribution grid 14 when calculating a feasibility of above mentioned transactions. Thus geographic position information (e.g. received from GPS) can be tagged to the information (power consumption, battery state of charge, etc.) send by the charging station 22 to the utility 16.

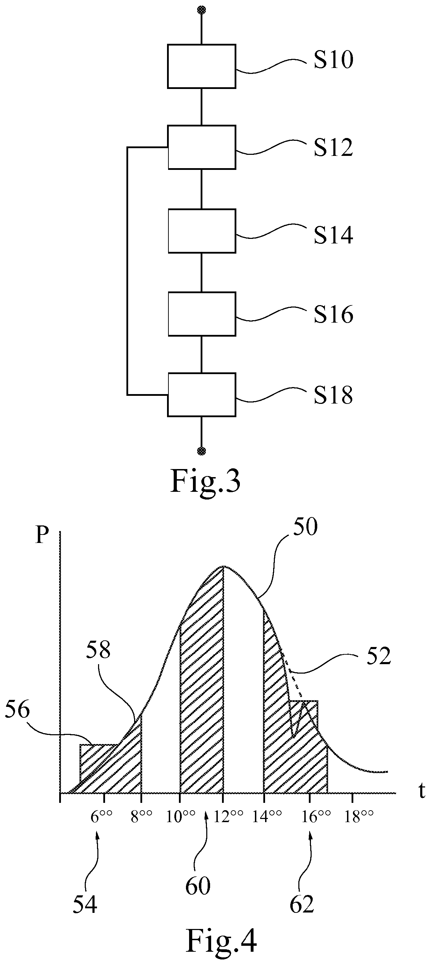

Fig. 3 shows a flow diagram for a method for controlling the charging of the battery 18 8 of the electrical vehicle 12b.

In step S10, the electrical vehicle 12b arrives at the charging station 22 and is electrically connected to the grid 14.

In step S12, the charging station 22 or the electrical vehicle 12b itself determines the amount of energy with which the battery 18 has to be charged. This may be done based on the state of charge 18 of the battery and the future energy demand , which may be determining based on the current location (for example the location of the charging station 22) and an intended drive route.

Further in step S12, an available charging time of the battery 18 is determined by the charging station 22 or the electrical vehicle 12b. This may be done by determining an intended departure time.

The electrical vehicle may comprise vehicle control module, for example a route guidance system with GPS, in which the driver already has input the intended drive route and the intended departure time. The vehicle control module may communicate this data to the charging station 18. It may also be possible that the intended drive route and the departure time are forecast from previous routes. For example, when the vehicle 12b is parked at the office of the owner, usually at night, the driver will drive home.

In step S14, the electrical vehicle 12b or the charging station 22 notifies the distribution network operator 16 or a third party actor 16 that it intends to charge the battery 18. Further, the distribution network operator 16 or a third party actor 16 determines the power instantaneously generated by the distributed energy resource 18 and sends this data to the charging station 22. Additionally, the distribution network operator 16 or a third party actor 16 determines the maximal power transmittable via the section 42 of the power grid 14 between the electrical vehicle 12b and the distributed energy source 32. For this determination it uses the position of the distributed energy source 32, the position of the electrical vehicle 12b and determines the section 42 of the power grid 14.

It may also be possible that the controller 38 of the distributed energy source 32 communicates its output (real time and short-term prediction) to the distribution network operator 16 or a third party actor 16 and that the car battery charger 22 communicates its state of charge to the distribution network operator 16 or a third party actor 16.

In step S16, in case, the anticipated transaction does not provoke grid overload or other stressful conditions (the input data may be processed by the distribution network operator 16 or a third party actor 16) the charging process at a specified rate is initiated. It may also be possible that the determined actual available power of the distributed energy source 32 and the maximal transmittable power are sent to the charging station 22 or the vehicle 12b, which constrains the charging power of the battery 18 such that not more than the actual available power is withdrawn from the power grid 14 and the instantaneously transmitted power does not exceed the (transmittable) maximum power.

In step S18, the battery 18 of the vehicle 12b is charged. After a time interval, when the battery has not reached the desired charging level, the method continues at step S12. The time interval is set such that changes in the parameters may be considered in the following iteration.

In step S16 it may be possible that a charging schedule is determined based on the determined amount of energy and the determined charging time, wherein the charging schedule comprises time slots and each time slot is associated with an estimated charging power for the battery 18. This determination may be done by the charging station 22 or the vehicle 12b itself.

For determining the charging schedule, in step S14, the distributed energy source 32, the distribution network operator 16 or the third party actor 16 will estimate a forecast for the power generated by the distributed energy source 32 and will transmit it to the charging station 22 or the vehicle 12b.

To explain the charging schedules in more detail, Fig. 4 shows a diagram with a curve 50 indicating the actual generated power P over the time t of a photovoltaic system 34. For example, at noon the solar radiation and the output power P of the system 34 are the highest. The estimation of the power generation may be based on the average power generation of the previous days 52 together with the weather report.

A first charging schedule 54 is indicated in the picture which relates to a charging of the battery 18, which is constrained to 1 1/2 hours. The charging schedule 54 shows the power P withdrawn from the grid 14.

The charging schedule is optimized such that the battery 18 of the vehicle 12b is charged in this predetermined time. Thus, during first time slots 56 the battery 18 is charged with a power larger than the power generated by the distributed energy source 32 and during second time slots 58 the charging power of the battery of the vehicle is constrained such that not more than the power generated by the distributed energy source 32 is withdrawn from the power grid 14.

The second charging schedule 60 is optimized such that the battery 18 is always charged with the same power as the distributed energy source 32 generates.

The third charging schedule 62 was also optimized in that way. However, for example due to clouds, the power generation of the distributed energy resource 32 was below the forecasted power generation. This has been balanced in the third charging schedule 62 with time slots in which more than the actual available power from the distributed energy source 32 is withdrawn from the grid.

Also, the charging schedule 64, 60, 62 may updated in the iteration after step S18, when new data is available.

Using above mentioned communication links between the electrical vehicles 12a, 12b and information about battery state of charge as well as about current location, the intended driving route and destination in real time could be made available from a fleet of electrical vehicles 12a, 12b in a given geographic area (for example the control area of the distribution network operator 16 or the third party actor 16). Assuming that this fleet will be a significant consumer of electric energy in that area it is possible to include these data in the load forecasting algorithms of network management systems. Such an integration will allow an predicting of e.g. generation and transmission overloads in certain areas. This prediction may also be time dependent based on the movement patterns and charging states of the electrical vehicles. This may become an additional base for taking decisions on accepting transactions between particular pairs of electrical vehicles 12b and distributed energy sources 32.

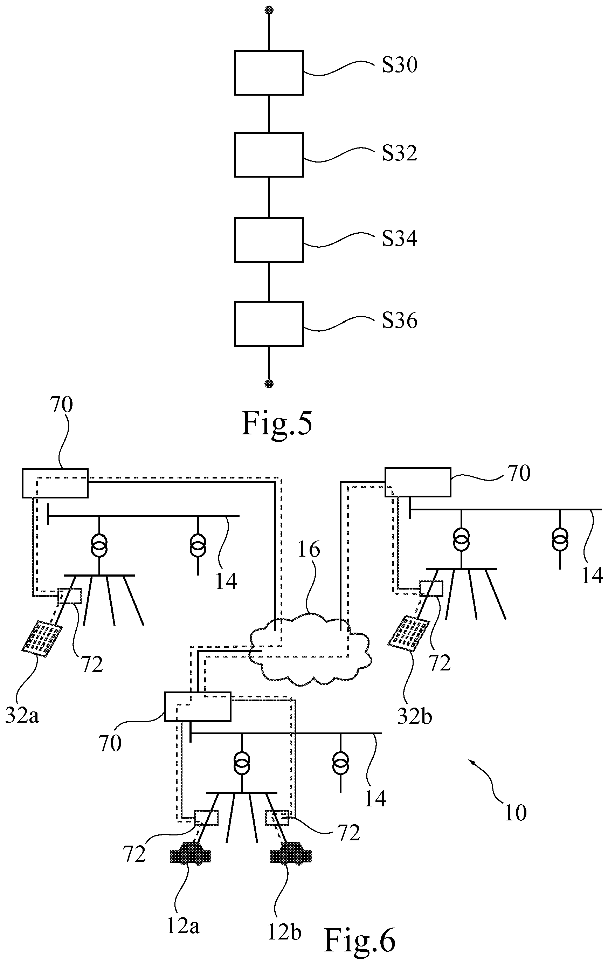

Fig. 5 shows a flow diagram for a method for controlling the charging of a plurality of electrical vehicles.

In step S30, the travel routes and load states of the plurality of vehicles are retrieved from the vehicles, for example, when the vehicles are at a charging station, and saved in a database of the distribution network operator 16 or the third party actor 16.

In step S32, based on this data, the charging load of the plurality of vehicles with respect to their actual loading locations and predicted future locations is estimated by the distribution network operator 16 or the third party actor 16.

In step S34, the power generation of power generation facilities and a power distribution in the power grid 14 is adapted by the distribution network operator 16 or the third party actor 16 such that the forecasted charging load can be satisfied. For example, the driving routes of at least a part of the electrical vehicles may be forecast based on already know driving routes (home to office) and the power generation and the power distribution may be adapted based on the forecast driving routes.

In step 36, the distribution network operator 16 or the third party actor 16 advices at least a part of the plurality of vehicles to charging locations (for example at predetermined charging times) such that the power generation and the power distribution is optimized. For example certain time slots and charging locations are sent to the vehicles, in which charging is very cheap.

It has to be understood that the charging of at least a part of the plurality of electrical vehicles may be controlled according to method described with respect to Fig. 3.

The electrical vehicle navigation system (for example in the above mentioned vehicle control module) may contain complete information about charging stations for electrical vehicles. The distribution network operator 16 or the third party actor 16 can extend this information by advising the electrical vehicle 12b to the best charging location 22 in the destination area or along the route (for example in order to maximize charging from the own remote distributed energy source 32) based on the actual grid loading and load forecast (see the paragraph above). Also, forecast of the power generation of distributed energy source 32 may be necessary in order to complete the information chain and to be able to create a realistic schedule for charging.

The electrical vehicle navigation system (for example in the above mentioned vehicle control module) may contain complete information about charging stations for electrical vehicles. The distribution network operator 16 or the third party actor 16 can extend this information by advising the electrical vehicle to the best charging location in the destination area or along the route (for example in order to maximize charging from the own remote distributed energy source 32) based on the actual grid loading and load forecast. Also, a forecast of the power generation of the distributed energy source 32 may be necessary in order to complete the information chain and to be able to create a realistic schedule for charging.

The driver may input the planned route to the electrical vehicle 12b, this information may be communicated to the distribution network operator 16 or the third party actor 16 and may be combined with the state of charge of the battery 18 and the available and forecasted power from the distributed energy source 32. The data processing may take place outside of the car (for example at the side of the distribution network operator 16 or the third party actor 16) and only results (proposed time, location, tariff for charging) may communicated back to the electrical vehicle 12b.

Bi-directional communication may allow the electrical vehicle 12b to pre-register for charging at a certain station 22 and time and for a certain price, to again improve the local load forecast as described above. The registration may be done by the driver or automatically based on the route, the energy consumption, the projected battery state of charge, the waiting time, expected tariffs at charging time. For example, pre-registered vehicles may have a lower tariff than vehicles that come without notice or an earlier pre-registration may be less expensive.

The registrations of electrical vehicles which are not coupled with local distributed energy sources may be aggregated by the distribution network operator 16 or the third party actor 16 and the aggregated charging schedule may be put as a bid to the energy market (for example an hour ahead).

Fig. 6 shows an embodiment of an infrastructure that may be used by the system 10. Each primary substation of the grid 14 has a local device called energy data router 70. Each mobile load (for example electrical vehicles 12a, 1b) and distributed energy sources 32a, 32b (for example local small generator like solar photovoltaic, combined heat and power, diesel generator, fuel cell, small wind turbine) are equipped with a measurement device 72 (so called smart electricity meter) which measures various electrical parameters in real time and is capable to communicate the result to up-stream hierarchy. The measurements are time and position (GPS) stamped. Instead or additionally to the device 72, dedicated current and voltage sensors may be used. The data is sent from the measurement device 72 to its associated energy data router 70, is collected by the energy data router 72 and may be sent to further energy data routers at an higher hierarchical level, which may belong to the distribution network operator 16 or the third party actor 16.

In the shown case, with the data distribution network operator 16 or the third party actor 16 assesses if both transactions vehicle 12a to distributed energy source 32a and vehicle 12b to distributed energy source 32b are feasible with regard to physical system constraints (loading of primary equipment). The dotted lines show the coupling of vehicle and distributed energy source, the dashed lines show the communication between the meters 72 and energy data routers 70, the solid lines show the communication between the energy data routers 72 and the distribution network operator 16 or the third party actor 16.

In case the electrical vehicle 12a, 12b is connected to the distribution grid 14 at the same location as the paired distributed energy source 32a, 32b (basically to the same transformer) a decision about feasibility of an energy exchange (transaction) may be taken locally by the energy router 70 and the distribution network operator 16 or the third party actor 16 is informed about the transaction. In this case the transaction may be for free.

In case of a remote connection (to another distribution transformer), the energy data router 70 at the transformer station routes the information from the electrical vehicle 12a and the distributed energy source 32a to the higher level energy router located at the distribution network operator 16 or the third party actor 16 (for example an application integrated into the distribution management system). The distribution network operator 16 or the third party actor 16 runs load flow and verifies constraints for proposed transactions. As a result all (selected) transactions are scheduled. The transaction cost is allocated to the owner of the electrical vehicle and the distributed energy source.

The energy data routers 70 and the measurement devices 72 may be implemented as programmed software modules or procedures, respectively. However, one skilled in the art will understand that they may be implemented fully or partially in hardware.
While the invention has been illustrated and described in detail in the drawings and foregoing description, such illustration and description are to be considered illustrative or exemplary and not restrictive; the invention is not limited to the disclosed embodiments.

## Claims

1. Method for controlling the charging of a battery (18) of an electrical vehicle (12b) connected, via a section of a power grid (14), to a distant distributed energy source (32), the method comprising:
determining a power instantaneously generated by the distributed energy source (32);
constraining a charging power of the battery (18) of the electrical vehicle (12b) such that not more than the instantaneously generated power is withdrawn from the power grid (14);
determining a position of the distributed energy source (32) and a position of the electrical vehicle (12b); and determining the section of the power grid (14);
determining a maximum power transmittable via the section of the power grid (14) between the distributed energy source (32) and the electrical vehicle (12b);
constraining the charging power of the battery (18) of the electrical vehicle (12b) such that a power instantaneously transmitted via the section of the power grid (14) does not exceed the maximum transmittable power.

2. The method of claim 1, comprising:
determining an amount of energy with which the battery (18) has to be charged;
estimating an available charging time of the battery (18);
determining a charging schedule (54, 60, 62) based on the determined amount of energy and the determined charging time, wherein the charging schedule comprises time slots and each time slot is associated with an estimated charging power for the battery (18).

3. The method of claim 2, wherein determining the amount of energy comprises:
determining a state of charge of the battery (18); and/or
determining an energy demand by determining a current location and an intended drive route.

4. The method of claim 2 or 3, wherein determining the charging time comprises:
determining an intended departure time.

5. The method of one of the claims 2 to 4, wherein determining the charging schedule (54, 60, 62) comprises:
estimating a forecast for the power generated by the distributed energy source (32).

6. The method of one of the claims 2 to 5, further comprising:
optimizing the charging schedule (54, 62) such that the battery (18) of the electrical vehicle (12b) is charged in a predetermined time; wherein
during first time slots (56) the battery (18) of the electrical vehicle (12b) is charged with a power larger than the power generated by the distributed energy source (32); wherein
during second time slots (58) the charging power of the battery (18) of the electrical vehicle (12b) is constrained such that not more than the power generated by the distributed energy source (32) is withdrawn from the power grid (14).

7. The method of one of the claims 1 to 6 further comprising:
forecasting the charging load of a plurality of vehicles (12b) with respect to their location;
adapting the power generation of power generation facilities and a power distribution in the power grid (14) such that the forecasted charging load can be satisfied.

8. The method of claim 7, further comprising:
forecasting the driving routes of at least a part of the electrical vehicles (12b);
adapting the power generation and the power distribution based on the driving routes.

9. The method of claim 7 or 8, further comprising:
advising at least a part of the plurality of vehicles (12b) to charging locations such that the power generation and the power distribution is optimized.

10. Computer program for controlling the charging of an electrical vehicle (12b) or a plurality of vehicles (12b), which, when being executed by at least one processor, is adapted to carry out the steps of the method of one of the claims 1 to 9.

11. A computer-readable medium, in which computer program according to claim 10 is stored.

12. A system (10) for charging an electrical vehicle (12b), comprising:
a power grid (14) controlled by a distributed network operator (16);
a distributed energy source (32) electrically connected to the power grid (14); wherein
the electrical vehicle (12b) is electrically connectable to the power grid (14); wherein
the distributed energy source (32) is adapted to transmit its actual power generation to the power grid (14); wherein
the electrical vehicle (12b) is adapted to transmit its load state to the power grid (14); wherein
the distributed network operator (16), the electrical vehicle (12b) and the distributed energy source (32) are adapted to carry out the steps of the method of one of claims 1 to 9.

## Patentansprüche

1. Verfahren zum Steuern des Ladens einer Batterie (18) eines Elektrofahrzeugs (12b), das über eine Sektion eines Stromnetzes (14) mit einer entfernten verteilten Energiequelle (32) verbunden ist, wobei das Verfahren Folgendes umfasst:
Bestimmen einer momentan von der verteilten Energiequelle (32) erzeugten Leistung;
Beschränken einer Ladeleistung der Batterie (18) des Elektrofahrzeugs (12b), so dass nicht mehr als die momentan erzeugte Leistung aus dem Stromnetz (14) abgezogen wird;
Bestimmen einer Position der verteilten Energiequelle (32) und einer Position des Elektrofahrzeugs (12b); und Bestimmen der Sektion des Stromnetzes (14);
Bestimmen einer über die Sektion des Stromnetzes (14) zwischen der verteilten Energiequelle (32) und dem Elektrofahrzeug (12b) übertragbaren Maximalleistung;
Beschränken der Ladeleistung der Batterie (18) des Elektrofahrzeugs (12b), so dass eine momentan über die Sektion des Stromnetzes (14) übertragene Leistung die maximal übertragbare Leistung nicht übersteigt.

2. Verfahren nach Anspruch 1, umfassend:
Bestimmen einer Energiemenge, mit welcher die Batterie (18) geladen werden soll;
Schätzen einer verfügbaren Ladezeit der Batterie (18);
Bestimmen eines Ladeplans (54, 60, 62) auf der Grundlage der bestimmten Energiemenge und der bestimmten Ladezeit, wobei der Ladeplan Zeitfenster umfasst und jedes Zeitfenster mit einer geschätzten Ladeleistung für die Batterie (18) verknüpft ist.

3. Verfahren nach Anspruch 2, wobei Bestimmen der Energiemenge Folgendes umfasst:
Bestimmen eines Ladezustands der Batterie (18); und/oder
Bestimmen eines Energiebedarfs durch Bestimmen eines aktuellen Standorts und einer beabsichtigten Fahrtroute.

4. Verfahren nach Anspruch 2 oder 3, wobei Bestimmen der Ladezeit Folgendes umfasst:
Bestimmen einer beabsichtigten Abfahrtszeit.

5. Verfahren nach einem der Ansprüche 2 bis 4, wobei Bestimmen des Ladeplans (54, 60, 62), Folgendes umfasst:
Bestimmen einer Vorausschätzung für die von der verteilten Energiequelle (32) erzeugte Leistung.

6. Verfahren nach einem der Ansprüche 2 bis 5, ferner Folgendes umfassend:
Optimieren des Ladeplans (54, 62), so dass die Batterie (18) des Elektrofahrzeugs (12b) in einem vorbestimmten Zeitraum geladen wird; wobei
während erster Zeitfenster (56) die Batterie (18) des Elektrofahrzeugs (12b) mit einer Leistung geladen wird, die größer als die von der verteilten Energiequelle (32) erzeugte Leistung ist; wobei
während zweiter Zeitfenster (58) die Ladeleistung der Batterie (18) des Elektrofahrzeugs (12b) beschränkt wird, so dass nicht mehr als die von der verteilten Energiequelle (32) erzeugte Leistung aus dem Stromnetz (14) abgezogen wird.

7. Verfahren nach einem der Ansprüche 1 bis 6, ferner Folgendes umfassend:
Vorausschätzen der Ladelast von mehreren Fahrzeugen (12b) hinsichtlich von deren Standorten;
Anpassen der Leistungserzeugung von Leistungserzeugungseinrichtungen und einer Leistungsverteilung in dem Stromnetz (14), so dass die vorausgeschätzte Ladelast erfüllt werden kann.

8. Verfahren nach Anspruch 7, ferner Folgendes umfassend:
Vorausschätzen der Fahrtrouten von zumindest einem Teil der Elektrofahrzeuge (12b);
Anpassen der Leistungserzeugung und der Leistungsverteilung auf der Grundlage der Fahrtrouten.

9. Verfahren nach Anspruch 7 oder 8, ferner Folgendes umfassend:
Zuweisen zumindest eines Teils der mehreren Fahrzeuge (12b) zu Ladestandorten, so dass die Leistungserzeugung und die Leistungverteilung optimiert wird.

10. Computerprogramm zur Steuern des Ladens eines Elektrofahrzeugs (12b) oder von mehreren Fahrzeugen (12b), das, wenn es von mindestens einem Prozessor ausgeführt wird, dafür eingerichtet ist, die Schritte des Verfahrens nach einem der Ansprüche 1 bis 9 auszuführen.

11. Computerlesbares Medium, in welchem das Computerprogramm nach Anspruch 10 gespeichert ist.

12. System (10) zum Laden eines Elektrofahrzeugs (12b), das Folgendes umfasst:
ein Stromnetz (14), das von einem Betreiber (16) eines verteilten Netzwerks gesteuert wird;
eine verteilte Energiequelle (32), die elektrisch mit dem Stromnetz (14) verbunden ist; wobei
das Elektrofahrzeug (12b) elektrisch an das Stromnetz (14) anschließbar ist; wobei
die verteilte Energiequelle (32) eingerichtet ist zum Übertragen von dessen aktueller Leistungserzeugung an das Stromnetz (14); wobei
das Elektrofahrzeug (12b) eingerichtet ist zum Übertragen von dessen Ladezustand an das Stromnetz (14); wobei
der Betreiber (16) des verteilten Netzwerks, das Elektrofahrzeug (12b) und die verteilte Energiequelle (32) eingerichtet sind zum Ausführen der Schritte des Verfahrens nach einem der Ansprüche 1 bis 9.

## Revendications

1. Procédé de contrôle du chargement d'une batterie (18) d'un véhicule électrique (12b) connecté, par l'intermédiaire d'une section d'un réseau électrique (14), à une source d'énergie distribuée distante (32), le procédé consistant à :
déterminer une puissance générée instantanément par la source d'énergie distribuée (32) ;
limiter une puissance de chargement de la batterie (18) du véhicule électrique (12b) de sorte que la puissance extraite du réseau électrique ne soit pas supérieure à la puissance générée instantanément (14) ;
déterminer une position de la source d'énergie distribuée (32) et une position du véhicule électrique (12b) ; et déterminer la section du réseau électrique (14) ;
déterminer une puissance maximale pouvant être transmise par l'intermédiaire de la section du réseau électrique (14) entre la source d'énergie distribuée (32) et le véhicule électrique (12b) ;
limiter la puissance de chargement de la batterie (18) du véhicule électrique (12b) de sorte qu'une puissance transmise instantanément par l'intermédiaire de la section du réseau électrique (14) ne dépasse pas la puissance maximale pouvant être transmise.

2. Procédé selon la revendication 1, comprenant les étapes consistant à :
déterminer une quantité d'énergie avec laquelle la batterie (18) doit être chargée ;
estimer un temps de chargement disponible de la batterie (18) ;
déterminer un programme de chargement (54, 60, 62) sur la base de la quantité d'énergie déterminée et du temps de chargement déterminé, le programme de chargement comprenant des intervalles de temps et chaque intervalle de temps étant associé à une puissance de chargement estimée pour la batterie (18).

3. Procédé selon la revendication 2, dans lequel la détermination de la quantité d'énergie consiste à :
déterminer un état de chargement de la batterie (18) ; et/ou
déterminer une demande d'énergie en déterminant une localisation actuelle et un itinéraire prévu.

4. Procédé selon la revendication 2 ou 3, dans lequel la détermination du temps de chargement consiste à :
déterminer une heure de départ prévue.

5. Procédé selon l'une des revendications 2 à 4, dans lequel la détermination du programme de chargement (54, 60, 62) consiste à :
estimer une prévision pour la puissance générée par la source d'énergie distribuée (32).

6. Procédé selon l'une des revendications 2 à 5, consistant en outre à :
optimiser le programme de chargement (54, 62) de sorte que la batterie (18) du véhicule électrique (12b) soit chargée à une heure prédéterminée ;
pendant des premiers intervalles de temps (56), la batterie (18) du véhicule électrique (12b) étant chargée avec une puissance supérieure à la puissance générée par la source d'énergie distribuée (32) ;
pendant des seconds intervalles de temps (58), la puissance de chargement de la batterie (18) du véhicule électrique (12b) étant limitée de sorte que la puissance extraite du réseau électrique (14) ne soit pas supérieure à la puissance générée par la source d'énergie distribuée (32).

7. Procédé selon l'une des revendications 1 à 6, consistant en outre à :
prévoir la charge de chargement d'une pluralité de véhicules (12b) par rapport à leur localisation ;
adapter la génération de puissance d'installations de génération de puissance et une distribution de puissance dans le réseau électrique (14) de sorte que la charge de chargement prévue puisse être satisfaite.

8. Procédé selon la revendication 7, consistant en outre à :
prévoir les itinéraires d'au moins une partie des véhicules électriques (12b) ;
adapter la génération de puissance et la distribution de puissance sur la base des itinéraires.

9. Procédé selon la revendication 7 ou 8, consistant en outre à :
annoncer au moins une partie de la pluralité de véhicules (12b) à des emplacements de chargement de sorte que la génération de puissance et la distribution de puissance soient optimisées.

10. Programme informatique pour contrôler le chargement d'un véhicule électrique (12b) ou d'une pluralité de véhicules (12b), qui, lorsqu'il est exécuté par au moins un processeur, est conçu pour réaliser les étapes du procédé selon l'une des revendications 1 à 9.

11. Support lisible par ordinateur, sur lequel est stocké un programme informatique selon la revendication 10.

12. Système (10) de chargement d'un véhicule électrique (12b), comprenant :
un réseau électrique (14) contrôlé par un opérateur de réseau distribué (16) ;
une source d'énergie distribuée (32) connectée électriquement au réseau électrique (14) ;
le véhicule électrique (12b) pouvant être connecté électriquement au réseau électrique (14) ;
la source d'énergie distribuée (32) étant conçue pour transmettre sa génération de puissance réelle au réseau électrique (14) ;
le véhicule électrique (12b) étant conçu pour transmettre son état de charge au réseau électrique (14) ;
l'opérateur de réseau distribué (16), le véhicule électrique (12b) et la source d'énergie distribuée (32) étant conçus pour réaliser les étapes du procédé selon l'une des revendications 1 à 9.
